# EUROPEAN PATENT APPLICATION

(11) **EP 1 460 403 A1**
(43) Date of publication of application: **22.09.2004**
(21) Application number: 04006265.5
(22) Date of filing: 16.03.2004
(51) Int. Cl.: G01L 23/22, G01L 23/10, F02P 19/02, F23Q 7/00

(54) **Glow plug with built-in combustion pressure sensor**

(30) Priority: 17.03.2003 JP 2003071703
(71) Applicant: NGK Spark Plug Co., Ltd., Nagoya-shi, Aichi 467-8525 (JP)
(72) Inventor: Okazaki, Koji, Mizuho-ku Nagoya-shi Aichi 467-8525 (JP); Kondo, Mitsuru, Mizuho-ku Nagoya-shi Aichi 467-8525 (JP); Fuma, Tomohiro, Mizuho-ku Nagoya-shi Aichi 467-8525 (JP); Suzuki, Takahiro, Mizuho-ku Nagoya-shi Aichi 467-8525 (JP)
(74) Representative: Grünecker, Kinkeldey, Stockmair & Schwanhäusser Anwaltssozietät

(57) **Abstract**

A glow plug comprises a plug case, a plug body held in the plug case and a combustion pressure sensor. The plug case has a sealing face formed on an inner surface thereof. The plug body includes a housing having a sealing portion airtightly engaged onto the sealing face of the plug case, a sheath having a rear end portion airtightly fixed in a front end portion of the housing, a heater disposed in the sheath, and a center electrode disposed in the housing and mechanically connected with the housing, the sheath and/or the heater so as to become axially displaced due to variations in combustion pressure. The combustion pressure sensor is arranged between rear end portions of the plug case and the center electrode and has a pressure-sensitive element that converts an axial displacement of the center electrode into an electrical signal for detection of the combustion pressure.

## Description

### BACKGROUND OF THE INVENTION

The present invention relates to a glow plug for an internal combustion engine, such as a diesel engine, and more particularly to a glow plug having a built-in combustion pressure sensor.

Hereinafter, the term "front" refers to a heating end side with respect to the axial direction of a glow plug, and the term "rear" refers to a side opposite the front side.

Japanese Laid-Open Patent Publication No. 59-060237 discloses a glow plug with a built-in combustion pressure sensor. The disclosed glow plug has an outer plug housing and an inner plug housing formed with a radially outward protrusion so as to allow a sensor installation space above the protrusion between the inner and outer plug housings. The combustion pressure sensor has an insulating member, an output electrode, a pressure-sensitive element and a fitting member built sequentially into the sensor installation space, with the fitting member drive-fitted in the outer plug housing to push the pressure-sensitive element, the output electrode and the insulating member onto the protrusion of the inner plug housing and thereby hold the pressure-sensitive element under stress.

### SUMMARY OF THE INVENTION

As the pressure-sensitive element and the other sensor components are disposed between the inner and outer plug housings, the above conventional double-housing glow plug becomes large in diameter at such a sensor component installing part and thus goes against the demand for size/diameter reduction.

It is therefore an object of the present invention to provide a glow plug with a built-in combustion pressure sensor, capable of responding to the demand for size/diameter reduction.

According to an aspect of the invention, there is provided a glow plug for an internal combustion engine, comprising: a cylindrical plug case having a rearward-facing sealing face formed on an inner surface thereof; a plug body held in the plug case, the plug body including: a cylindrical housing having a sealing portion engaged onto the sealing face of the plug case to form an airtight seal between the plug case and the housing; a sheath having a rear end portion airtightly fixed in a front end portion of the housing; a heater disposed in the sheath and generating heat upon energization thereof; and a center electrode disposed in the housing and having a rear end portion thereof projecting from the housing, the center electrode being electrically connected with the heater and mechanically connected with at least one of the housing, the sheath and the heater so as to become axially displaced in response to variations in engine combustion pressure; and a combustion pressure sensor arranged between a rear end portion of the plug case and the rear end portion of the center electrode and having a pressure-sensitive element that converts an axial displacement of the center electrode into an electrical signal for detection of the variations in engine combustion pressure.

According to another aspect of the invention, there is provided a glow plug for an internal combustion engine, comprising: an outer plug housing having a first sealing face formed on an inner surface thereof; an inner plug housing held in the outer plug housing and having a second sealing face engaged with the first sealing face to form an airtight seal between the inner and outer plug housings; a center electrode disposed in the inner plug housing and having a rear end portion projecting from a rear end of the inner plug housing and a radially outward protrusion formed on an outer surface of the rear end portion, the center electrode being under compressive stress to press the protrusion against the rear end of the housing; an insulating member interposed between the rear end of the housing and the protrusion of the center electrode to keep the housing and the center electrode insulated from each other; a sheath having a rear end portion airtightly fixed in the inner plug housing and a front end portion to be located in a combustion chamber of the engine so as to receive combustion pressure; a heater disposed in the sheath and electrically connected with the center electrode; and a combustion pressure sensor arranged between the rear end portion of the outer plug housing and the rear end portion of the center electrode and having a pressure-sensitive element that generates an electrical signal in response to variations in the combustion pressure.

The other objects and features of the invention will also become understood from the following description.

### BRIEF DESCRIPTION OF THE DRAWINGS

FIG. 1A is a half-sectional view of a glow plug according to a first embodiment of the present invention.

FIG. 1B is a top view of the glow plug according to the first embodiment of the present invention.

FIG. 1C is an enlarged half-sectional view of the engagement of a plug case and a plug body of the glow plug according to the first embodiment of the present invention.

FIG. 2 is an enlarged half-sectional view of a rear end portion of the glow plug according to the first embodiment of the present invention.

FIG. 3A is a side view of the plug body of the glow plug according to the first embodiment of the present invention.

FIG. 3B is a sectional view of the plug body of the glow plug according to the first embodiment of the present invention.

FIG. 3C is an enlarged sectional view of a front end portion of the plug body according to the first embodiment of the present invention.

FIG. 4A is a perspective view of a lead brace of the glow plug according to the first embodiment of the present invention.

FIG. 4B is a schematic illustration of how the lead brace holds a lead.

FIG. 5A is a schematic illustration of the structure for fixing the glow plug in an engine plug hole according to the first embodiment of the present invention.

FIG. 5B is an enlarged half-sectional view of the engagement of the glow plug in the plug hole according to the first embodiment of the present invention.

FIG. 6 is a schematic illustration of how to manufacture the glow plug according to the first embodiment of the present invention.

FIG. 7 is an enlarged half-sectional view of a rear end portion of a glow plug according to a second embodiment of the present invention.

FIG. 8 is an enlarged half-sectional view of a rear end portion of a glow plug according to a third embodiment of the present invention.

FIG. 9 is an enlarged sectional view of a front end portion of a glow plug according to a fourth embodiment of the present invention.

FIG. 10 is a half-sectional view of a glow plug according to a fifth embodiment of the present invention.

FIG. 11 is an enlarged half-sectional view of a rear end portion of the glow plug according to the fifth embodiment of the present invention.

### DESCRIPTION OF THE EMBODIMENTS

In the following first to fifth embodiments, like parts and portions are designated by like reference numerals to thereby omit repeated descriptions thereof.

### First Embodiment

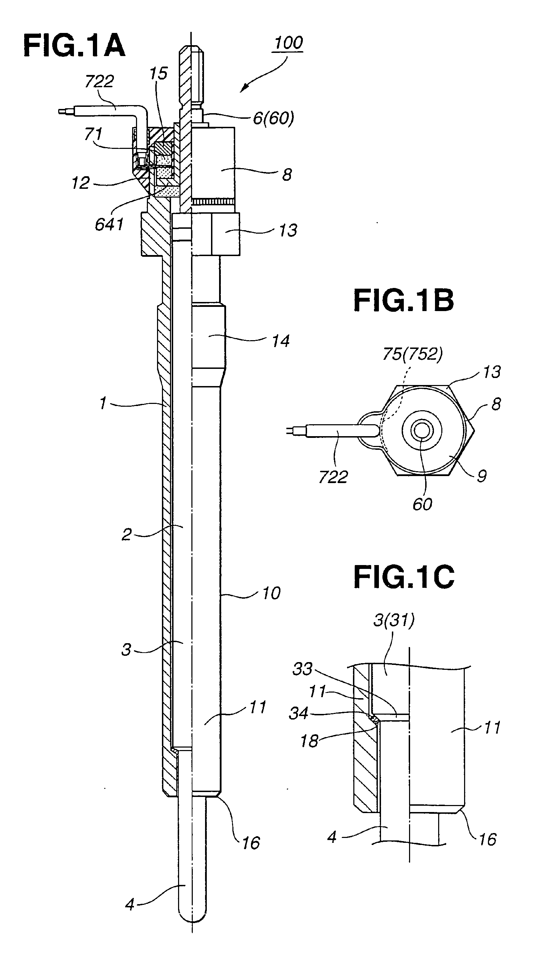

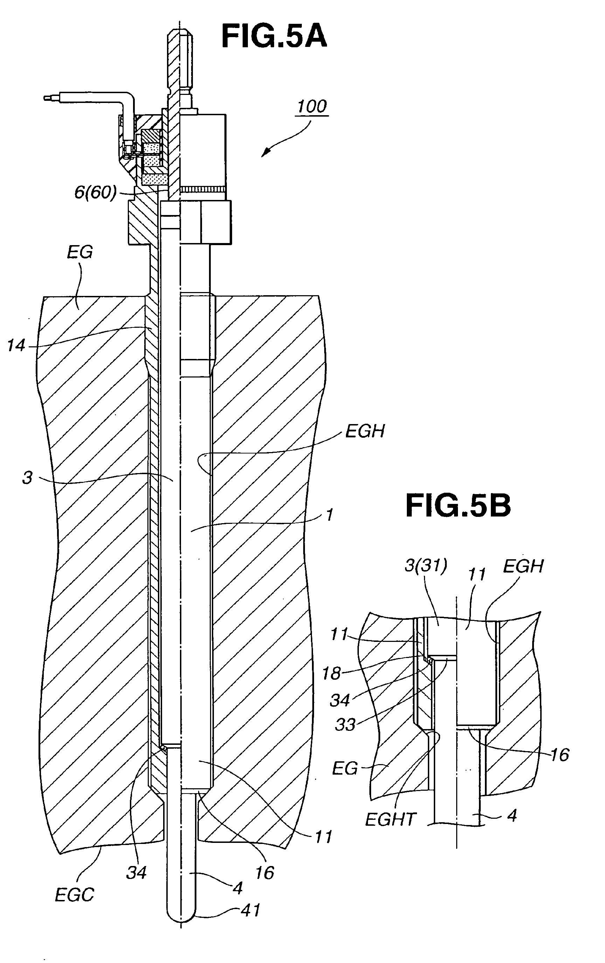

The first embodiment will be now described below with reference to FIGS. 1 to 6. A glow plug 100 of the first embodiment is designed for use in an internal combustion engine EG (see FIGS. 5A and 5B), and comprises a cylindrical plug case 1, a plug body 2 held in the plug case 1 and having a cylindrical housing 3, a sheath 4 partly fitted in the housing 3, a heater 5 disposed in the sheath 4 and a center electrode 6 disposed in the housing 3 for power supply to the heater 5 and having a mechanical connection with at least one of the housing 3, the sheath 4 and the housing 5, a combustion pressure sensor 70 disposed between the plug case 1 and the center electrode 6 to detect a combustion pressure of the engine EG and various insulating or sealing members 34, 51, 52, 53, 65 and 67.

The plug case 1 (as an outer plug housing) is made of carbon steel, and includes a cylindrical plug shell 10 having front and rear end portions 11 and 12, a male threaded portion 14 formed between the front and rear end portions 11 and 12 for screwing the glow plug 100 into a plug hole EGH of the engine EG and a hexagonal tool engaging portion 13 formed between the rear end portion 12 and the threaded portion 14 to be engaged with a tool, such as a wrench, for fixing the glow plug 100 in the plug hole EGH as shown in FIG. 1A.

The front end portion 11 of the plug case 1 has a sealing face 16 formed at a front end thereof and tapering down toward the front to be engaged with a tapered face EGHT of the plug hole EGH as shown in FIGS. 1A and 1C, thereby providing an airtight seal between the glow plug 100 and the plug hole EGH. The formed position of the sealing face 16 on the plug case 1 is not limited to the above. Depending on the positional relationship with the tapered face EGHT of the plug hole EGH, the sealing face 16 can alternatively be formed at any other appropriate position in a front side of the threaded portion 14. As shown in FIG. 1C, the front end portion 11 of the plug case 1 has a rearward-facing sealing face 18 formed on an inner surface thereof and tapering down toward the front for airtightly engaging the plug body 2 in the plug case 1 (discussed below in detail).

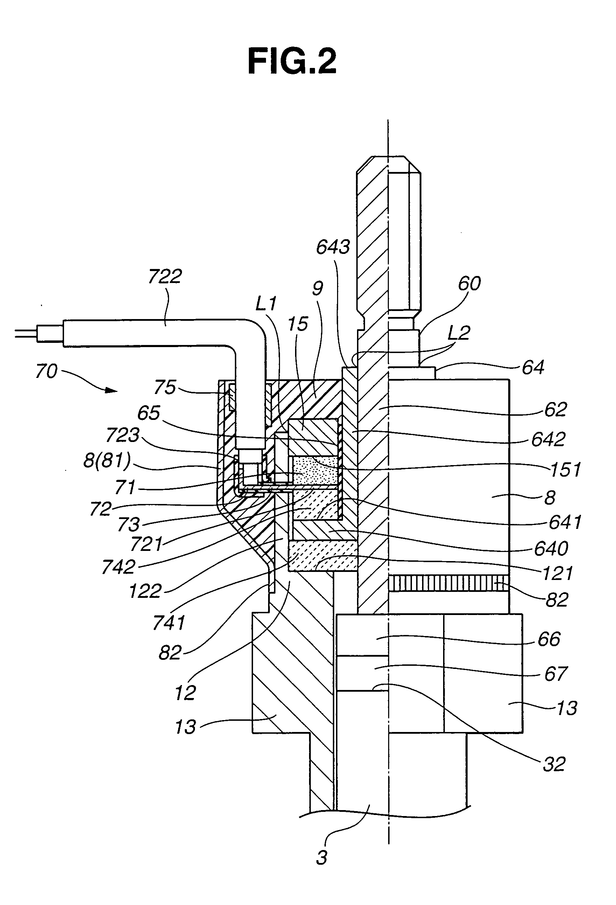

The rear end portion 12 of the plug case 1 has a rear-facing sensor seat 121 formed on an inner surface thereof and a cylindrical wall 122 extending from the sensor seat 121 toward the rear as shown in FIG. 2. An axially-extending slit or hole is formed in the cylindrical wall 122.

The plug case 1 also includes a ring-shaped inward protrusion 15 protruding radially inwardly from a rear end of the cylindrical wall 122 and facing the sensor seat 121 as shown in FIG. 2. The plug shell 10 and the inward protrusion 15 are formed into separate pieces and joined together by laser welding at a circumferential joint L1 between the inward protrusion 15 and the rear end of the cylindrical wall 122, so that the inward protrusion 15 becomes mechanically integral with the plug shell 10.

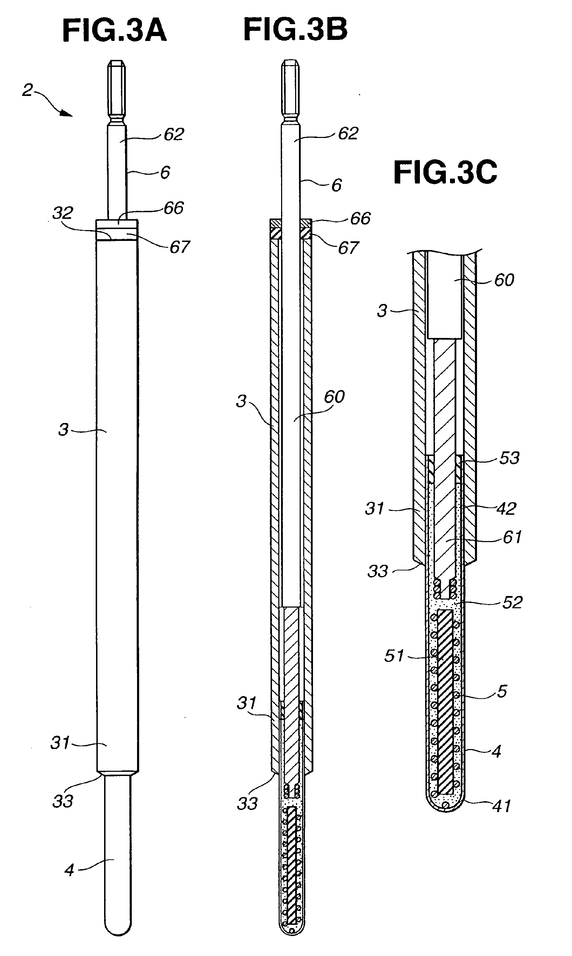

The housing 3 (as an inner plug housing) is also made of carbon steel, and has a front end portion 31, a rear end 32 located in a front side of the rear end portion 12 of the case body 10 when the plug body 2 is placed in position within the plug case 1 and a sealing portion 33 formed at a front end of the housing 3 as shown in FIGS. 2 and 3A. The sealing portion 33 of the housing 3 has a sealing face facing forward and tapering down toward the front to be engaged onto the sealing face 18 of the plug case 1 via the gasket 34 as shown in FIG. 1C, thereby ensuring an airtight seal between the plug case 1 and the plug body 2. The gasket 34 is made of soft metal (such as copper).

As both of the sealing face 18 of the plug case 1 and the sealing face 33 of the housing 3 taper down toward the front, the plug case 1 and the housing 3 can be easily brought into proper alignment by each other upon engagement of the sealing faces 18 and 33. By engagement of the tapered sealing faces 18 and 33, the housing 3 can be also prevented from becoming radially displaced relative to the plug case 1. This makes it possible to lessen the space between an inner surface of the plug case 1 and an outer surface of the housing 3 and to reduce the diameter of the glow plug 100. The airtight seal between the plug case 1 and the housing 3 can be maintained by means of the gasket 34 even if the housing 3 becomes slightly displaced relative to the plug housing 1.

Although the sealing portion 33 is formed at the front end of the housing 3 in the first embodiment, the formed position of the sealing portion 33 on the housing 3 is not limited to the above. Depending on the positional relationship with the sealing face 18 of the plug case 1, the sealing portion 33 can alternatively be formed at any other appropriate position in a front side of the threaded portion 14. However, if the airtight seal between the plug case 1 and the plug body 2 is not established at a front position (e.g. if established at a rear position near the pressure-sensitive element in the aforementioned glow plug of Japanese Laid-Open Patent Publication No. 59-060237), a high-pressure combustion gas is allowed to flow into the space between the plug case 1 and the housing 3. Once the combustion gas enters into such a narrow space between the plug case 1 and the housing 3, it is very unlikely that the combustion gas comes out of the space between the plug case 1 and the housing 3 when the combustion pressure of the engine EG becomes low. As a result, the pressure inside the space between the plug case 1 and the housing 3 remains high so as to keep pushing the housing 3, or equivalently, the plug body 2 toward the rear and to decrease the amount of displacement of the plug body 2 made by development of the combustion pressure (described later in detail). Then, the apparent amount of variations in the combustion pressure detected by the combustion pressure sensor 70 becomes decreased to cause various defects such as sensitivity deterioration in the combustion pressure sensor 70. It is thus desirable to form the sealing portion 33 of the housing 3 so as to decrease the axial length of the open space between the plug case 1 and the housing 3 (i.e. the length from the front end of the housing 3 to the engagement of the sealing faces 18 and 33). It is most desirable to form the sealing portion 33 on the front end of the housing 3 as described above in order to totally prevent the entry of the combustion gas into the space between the plug case 1 and the housing 3.

The sheath 4 is made of stainless steel and has a substantially semispherical closed front end portion 41 projecting from the plug case 1 and the housing 3 and a rear end portion 42 press-fitted in the front end portion 31 of the housing 3 as shown in FIG. 3C so as to airtightly fix an outer surface of the rear end portion 42 to an inner surface of the front end portion 31 and thereby prevent the combustion gas from flowing into the housing 3 and the sheath 4.

The heater 5 is a metal wire made of e.g. a chromium-iron alloy or cobalt-nickel alloy and coiled around the insulating pole 51 as shown in FIG. 3C. A front end of the heater 5 is welded to the closed front end portion 41 of the sheath 4 for electrical connection between the heater 5 and the sheath 4, whereas a rear end of the heater 5 is wound around the center electrode 6 for electrical connection between the heater 5 and the center electrode 6. Through the application of a voltage between the center electrode 6 and the plug case 1 to which the heater 5 is connected via the housing 3 and the sheath 4, the heater 5 becomes energized and generates heat to aid the stating of the engine EG. The insulating powder 52 is tightly packed into the sheath 4 so that the sheath 4 and the heater 5 are mechanically integral with each other. In order to prevent the leakage of the insulating powder 52, the rubber packing 53 is fitted between the rear end portion 42 of the sheath 4 and the center electrode 6.

The center electrode 6 is made of iron, and includes an electrode rod 60 having a front end portion 61 around which the heater 5 is wound and a rear end portion 62 that is located in a rear side of the rear end 32 of the housing 3 when the center electrode 6 is placed in position within the housing 3 as shown in FIGS. 2, 3B and 3C. A rear end of the center electrode 6 projects from the plug case 1, and threads are cut in the projecting end of the center electrode 6 for securing a connection terminal (not shown) with a nut (not shown).

The center electrode 6 also includes a flanged sleeve 64 provided around the rear end portion 62 of the electrode rod 60 and a ring-shaped metallic protrusion 66 caulked to the electrode rod 60 so as to make contact with the rear end 32 of the housing 3 via the insulating washer 67 as shown in FIG. 2. The insulating washer 67 is made of a ceramic material or resin (such as nylon 6, 6).

The flanged sleeve 64 is L-shaped in half section, and includes a cylindrical portion 642 having a rear end 643 located in a rear side of the rear end portion 12 of the plug case 1 and a ring-shaped outward protrusion 640 formed integral with the cylindrical portion 642 and protruding radially outwardly from a front end of the cylindrical portion 642 as shown in FIG. 2. The electrode rod 60 and the sleeve 64 are formed into separate pieces and joined together by laser welding at a circumferential joint L2 between the electrode rod 60 and the rear end 643 of the cylindrical portion 642, so that the sleeve 64 becomes mechanically integral with the electrode rod 60.

Further, the center electrode 6 is preloaded in such a manner as to bring the protrusion 66 closer to the rear end 32 of the housing 3 and thereby apply a compressive load to the insulating washer 67 (as will be described later in detail). With such placement, the center electrode 6 makes a mechanical connection with the housing 3 while being kept insulated from the housing 3 by means of the insulating washer 67.

In the glow plug 100, there is a sensor installation space defined by the inward protrusion 15, the sensor seat 121 and the cylindrical wall 122 of the rear end portion 12 of the plug case 1 and the rear end portion 62 of the center electrode 6 for installing therein the combustion pressure sensor 70.

The combustion pressure sensor 70 includes a ring-shaped pressure-sensitive element 71, a ring-shaped electrode plate 721 and ring-shaped insulating spacers 741 and 742 to be fitted around the rear end portion 62 of the center electrode 6 as shown in FIG. 2. The insulating spacer 741, the outward protrusion 640 of the center electrode 6, the insulating spacer 742, the electrode plate 721 and the pressure-sensitive element 71 are seated on the sensor seat 121 in order of mention (from the side of the sensor seat 121) so that the pressure-sensitive element 71 is placed between a front surface 151 of the inward protrusion 15 and a rear surface 641 of the outward protrusion 640. The inward protrusion 15 and the outward protrusion 640 thus function as parts of the combustion pressure sensor 70.

The pressure-sensitive element 71 is a piezoelectric element mainly made of lead titanate and polarized in the axial direction of the glow plug 100 so as to generate, when receiving axial compressive stress, electrical charge in response to variations in the compressive stress. In order for the glow plug 100 to have a smaller outer diameter, the inner diameter of the ring-shaped pressure-sensitive element 71 is made smaller than the inner diameter of the plug case 1. Further, the pressure-sensitive element 71 is preloaded with the inward protrusion 15 and the outward protrusion 640 brought closer together to keep the outward protrusion 640, the insulating spacer 742, the electrode plate 721, the pressure-sensitive element 71 and the inward protrusion 15 into intimate contact with each other (as will be described later in detail).

Alternatively, the pressure-sensitive element 71 can be a piezoelectric element mainly made of e.g. lead zirconate titanate or barium titanate, an electrostriction element or any other element capable of generating electric charge in response to variations in mechanical stress applied thereto. The pressure-sensitive element 71 may alternatively be held under no or tensile stress. However, the pressure-sensitive element 71 especially made of piezoelectric material is susceptible to rupture under tensile stress. Moreover, there arises a possibility of forming clearance between the sensor components to decrease the displacements of the plug components due to backlash. It is thus desirable that the pressure-sensitive element is held under compressive stress. Although the pressure-sensitive element 71 has no electrode layers formed thereon in the first embodiment, it is alternatively possible to form electrode layers on axially opposite surfaces of the pressure-sensitive element 71.

The electrode plate 721 is made of an iron-nickel alloy, and has an output portion 73 protruding radially outwardly from the slit or hole of the cylindrical wall 122 of the plug case 1 to read out the output of the pressure-sensitive element 71.

The insulating spacer 741 is made of alumina ceramic and interposed between the outward protrusion 640 and the sensor seat 121. Herein, the inward protrusion 15 has an inner diameter larger than the outer diameter of the cylindrical portion 642 of the sleeve 64 of the center electrode 6, and the outward protrusion 640 has an outer diameter smaller than the inner diameter of the cylindrical wall 122 of the plug case 1. The plug case 1 and the center electrode 6 are thus kept insulated from each other by means of the insulating spacer 741.

The insulating spacer 741 is made of alumina ceramic and interposed between the inward protrusion 15 and the pressure-sensitive element 71 to keep the pressure-sensitive element 71 and the electrode plate 721 insulated from the plug case 1.

Further, the pressure-sensitive element 71 and the electrode plate 721 is kept insulated from the center electrode 6 with the insulating tube 65 fitted around the cylindrical portion 642 of the sleeve 64 and interposed between the pressure-sensitive element 71, the electrode plate 721 and the insulating spacer 742 of the combustion pressure sensor 70 and the cylindrical portion 642 of the sleeve 64.

As shown in FIG. 2, the glow plug 100 additionally includes a protective cover 8, a lead 722, an insulating tube 723, a lead brace 75 and a sealant 9.

The protective cover 8 is made of stainless steel, and includes a cover portion 81 covering therein the rear end portion 12 of the plug case and the output portion 73 of the electrode plate 721 and a front end portion 82 joined by laser welding to the outer surface of the rear end portion 12 of the plug case 1.

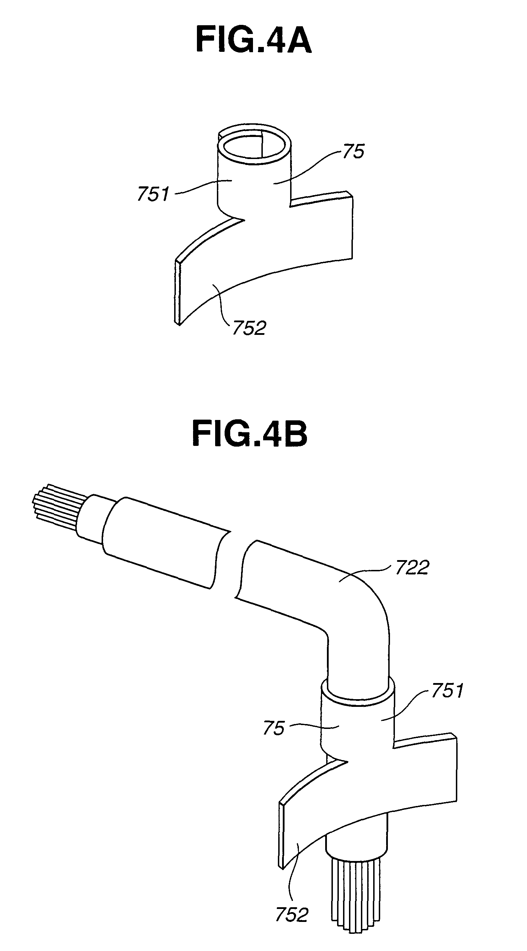

The lead 722 is a braided wire, and has a bare front portion joined by spot welding to the output portion 73 of the electrode plate 721 to form an output circuit 72 through which the electrical charge of the pressure-sensitive element 71 is outputted to an ECU (not shown) via a charge amplifier (not shown). Based on the output of the pressure-sensitive element 71, the combustion pressure is determined as one parameter for controlling the operations of the engine EG. The output portion 73 of the electrode plate 721 and the bare portion of the lead 722 are covered with the insulating tube 723 and kept insulated from the other plug components. The lead 722 is braced by the lead brace 75. As shown in FIGS. 1C, 4A and 4B, the lead brace 75 has a holding portion 751 to hold therein the lead 722 and an arc-shaped joint portion 752 joined by spot welding to an inner surface of the protective cover 8. The lead 722 can be thus easily drawn externally from an open rear end of the protective cover 8 to the ECU and set apart from the engine EG. Also, the output circuit 72, defined by the axially rearwardly extending lead 722 and the radially outwardly protruding output portion 73, can be simplified and compact in size.

The sealant 9, made of a silicon resin, is filled into the protective cover 8 to seal the lead 722, the output portion 73 of the electrode plate 721, the inward protrusion 15 and the rear end portion 12 of the plug case 1 as shown in FIG. 2, thereby preventing moisture and oil contents from adhering to the pressure-sensitive element 71, the electrode plate 721 and the lead 722 and from causing deteriorations in the electrical properties such as insulation resistance of the pressure-sensitive element 71, the electrode plate 721 and the lead 722.

To mount the above-structured glow plug 100 in the engine EG, the glow plug 100 is screwed from its front end into the plug hole EGH by hooking the tool onto the tool engaging portion 13. The glow plug 100 is then airtightly fixed in plug hole EGH by means of the threaded portion 14 in such a manner as to keep the sealing face 16 of the plug case 1 in contact with the tapered face EGHT of the plug hole EGH and to arrange the front end portion 41 of the sheath 4 within a combustion chamber EGC of the engine EG as shown in FIGS. 5A and 5B. As the tool engaging portion 13 is formed in a front side of the rear end portion 12 of the plug case 1 and the pressure-sensitive element 71 and the other sensor components are installed radially inside of the cylindrical wall 122 of the rear end portion 12 of the plug case 1, the tool engaging portion 13 is sufficiently made large in radial thickness. Accordingly, there is no fear of defects such as deformation in the tool engaging portion 13 in the plug mounting operation with the tool.

In this state, the sealing face 16 receives an axially rearward force from the tapered surface EGHT. A part of the plug case 1 between the sealing surface 16 and the threaded portion 14 contracts upon receipt of such an axially rearward force to slightly decrease the length of the part of the plug case 1 between the sealing face 16 and the threaded portion 14. As the housing 3, the sheath 4, the heater 5 and the center electrode 6 are mechanically integral with each other as described above, the housing 3, the sheath 4, the heater 5 and the center electrode 6 become axially displaced toward the rear relative to the threaded portion 14 of the plug case 1 by an amount corresponding to the contraction of the plug case 1. The axial displacement of the center electrode 6 moves the outward protrusion 640 toward the rear, thereby applying an axially compressive load onto the pressure-sensitive element 71 and increasing the total axial compressive stress on the pressure-sensitive element 71.

When the engine EG starts, the combustion pressure in the combustion chamber EGC varies with fuel combustion. Then, the combustion pressure is exerted on the sheath 4 to cause the housing 3, the sheath 4, the heater 5 and the center electrode 6 to become axially displaced together to push the outward protrusion 640 toward the pressure-sensitive element 71. The pressure-sensitive element 71 converts the displacement of the center electrode 6 into an electrical signal for detection of variations in the combustion pressure.

In the first embodiment, the axial displacements of the housing 3, the sheath 4, the heater 5 and the center electrode 6 of the plug body 2 are not restricted by the engagement of the sealing faces 18 and 33 because the sealing faces 18 and 33 are pressed against each other via the gasket 34. This makes it possible to allow the housing 3, the sheath 4, the heater 5 and the center electrode 6 of the plug body 2 to be displaced relatively largely to cause a large variation in the compressive stress on the pressure-sensitive element 71 and thereby possible obtain a larger output of the pressure-sensitive element 71. Furthermore, the combustion pressure sensor 70 can detect variations in the combustion pressure without fail as the compression stress on the pressure-sensitive element 71 increases at the time of mounting the glow plug 100 in the engine EG and at the time of increase of the combustion pressure. In addition, the combustion pressure sensor 70 is disposed between the rear end portion 12 of the plug case 1 and the rear end portion 62 of the center electrode 6 in the glow plug 100. The glow plug 100 can be made smaller in diameter at such a sensor component installing part as compared with the case where the combustion pressure sensor is disposed between the inner and outer plug housings as in the aforementioned conventional glow plug, and becomes capable of responding to the demand for size/diameter reduction.

The glow plug 100 can be manufactured by the following procedure.

First, the housing 3, the sheath 4, the heater 5 and the electrode rod 60 are assembled together by press-fitting the rear end portion 42 of the sheath 4 in the front end portion 31 of the housing 3 with the heater 5 built in the sheath 4 and by placing the electrode rod 60 in the housing 3. The method for assembling the housing 3, the sheath 4, the heater 5 and the electrode rod 60 (including the placement of the heater 5 in the sheath 4, the connection of the heater 5 to the sheath 4 and to the electrode rod 60, the filling of the insulating powder material 52 into the sheath 4, the press-fitting of the sheath 4 into the housing 3) is conventional. The detailed illustrations and explanations of how to assemble the housing 3, the sheath 4, the heater 5 and the electrode rod 60 are thus omitted.

Next, the insulating washer 67 is fitted around the electrode rod 60. The protrusion ring 66 is then fitted around the electrode rod 60 and caulked radially inwardly to the electrode rod 60 to bring the insulating washer 67 into contact with the rear end 32 of the housing 3.

After the gasket 34 is inserted into the plug shell 10 and put on the sealing face 18, the thus-obtained plug body subassembly is placed in the plug shell 10 so as to hold the gasket 34 between the sealing face 18 of the plug case 1 and the sealing face 33 of the housing 3.

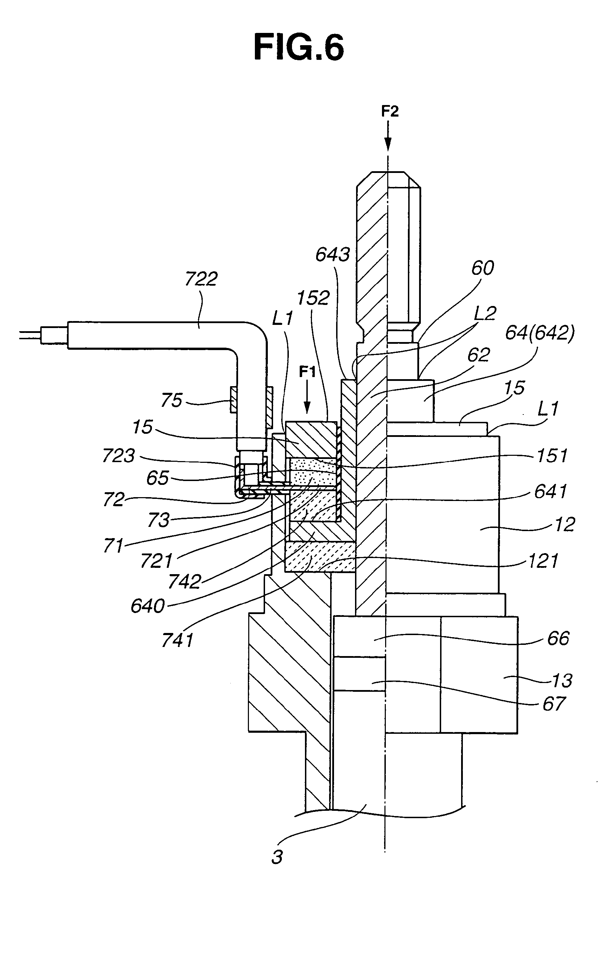

As shown in FIG. 6, the insulating spacer 741 is fitted around the electrode rod 60 and seated on the sensor seat 121 of the rear end portion 12 of the plug case 1. The sleeve 64 is fitted around the electrode rod 60 so as to place the outward protrusion 640 on the rear side of the insulating spacer 741. Before or after fitting the sleeve 64 around the electrode rod 60, the insulating tube 65 is put around the cylindrical portion 642 of the sleeve 64. The insulating spacer 742 is fitted around the cylindrical portion 642 of the sleeve 64 and stacked on the rear side 641 of the outward protrusion 640 of the sleeve 64. Then, the electrode plate 721 is fitted around the cylindrical portion 642 of the sleeve 64 and stacked on a rear side of the insulating spacer 742 while allowing the output portion 73 to project radially outwardly from the slit or hole of the cylindrical wall 122 of the plug case 1. The pressure-sensitive element 71 is fitted around the cylindrical portion 642 of the sleeve 64 and stacked on a rear side of the electrode plate 721. The inward protrusion piece 15 is fitted around the cylindrical portion 642 of the sleeve 64 and stacked on a rear side of the pressure-sensitive element 71, whereby the pressure-sensitive element 71 is located between the rear surface 641 of the outward protrusion 640 and the front surface 151 of the inward protrusion 15.

While applying an axially frontward force (indicated by an arrow F1 of FIG. 6) to a rear surface 152 of the inward protrusion piece 15, the inward protrusion 15 is joined at the joint L1 to the cylindrical wall 122 by laser welding so that the inward protrusion 15 becomes mechanically integral with the cylindrical shell 1 (i.e. the plug case 1 becomes an integral piece). The laser welding is performed using e.g. a YAG laser. The force applied to the inward protrusion 15 is released after the laser welding, but the pressure-sensitive element 71 remains under compressive stress. In the above preloading/joining operation, the compressive stress on the pressure-sensitive element 71 can be thus adjusted appropriately and, even when either of the pressure-sensitive element 71, the insulating spacers 741 and 742 and other components has thickness tolerances, prevented from varying due to such dimensional tolerances. By laser welding the inward protrusion 15 to the cylindrical shell 10 in a short time, the pressure-sensitive element 71 can be also prevented from deteriorating on thermal exposure during the laser welding.

While applying an axially frontward force (indicated by an arrow F2 of FIG. 6) to the rear end portion 62 of the electrode rod 60, the sleeve 64 is joined at the joint L2 to the electrode rod 60 by laser welding so that the sleeve 64 becomes integral with the electrode rod 60 (i.e. the center electrode 6 becomes an integral piece). The laser welding is performed using e.g. a YAG laser. By laser welding the sleeve 64 to the electrode rod 60 in a short time, the pressure-sensitive element 71 can be also prevented from deteriorating on thermal exposure during the laser welding.

By forming the plug case 1 with the plug shell 10 and the inward protrusion 15 and by forming the center electrode 6 with the electrode rod 60 and the sleeve 64, the pressure-sensitive element 71 can be easily held between the inward protrusion 15 and the outward protrusion 640 as described above.

The lead 722 is joined by spot-welding to the output portion 73 of the electrode plate 721. The protective cover 8 is press-fitted around the plug case 1 so as to cover the rear end portion 12 of the plug case 1 and the output portion 73 of the electrode plate 721, and then, joined at the front end portion 82 to the rear end portion 12 of the plug case 1 by laser welding. The joint portion 752 of the lead brace 75 is joined by spot welding to the inner surface of the protective cover 8. Finally, the silicon resin is filled into the protective cover 8 so as to seal therein the lead 722, the output portion 73 of the electrode plate 721, the inward protrusion 15 and the rear end portion 12 of the plug case 1 and hardened to form the sealant 9. The glow plug 1 is then completed.

### Second Embodiment

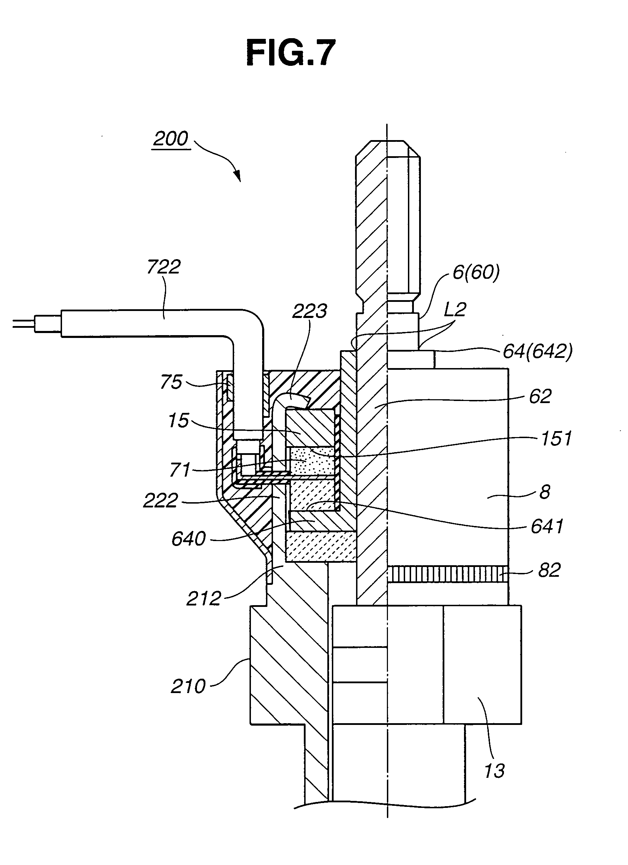

Next, the second embodiment will be described below with reference to FIG. 7. A glow plug 200 of the second embodiment is structurally the same as the first embodiment, except for its plug case structure.

The plug case 1 of the glow plug 200 has a cylindrical plug shell 210 and an inward protrusion 15 formed into separate pieces. A rear end portion 212 of the plug shell 210 is formed with a cylindrical wall 222, and the pressure-sensitive element 71 and the other sensor components are disposed radially inside the cylindrical wall 22. The cylindrical wall 222 has a rear edge 223 caulked radially inwardly to the inward protrusion 15 so that the caulked edge 223 pushes the inward protrusion 15 toward the front. There is no need to join the inward protrusion 15 to the cylindrical wall 222 by e.g. laser welding.

### Third Embodiment

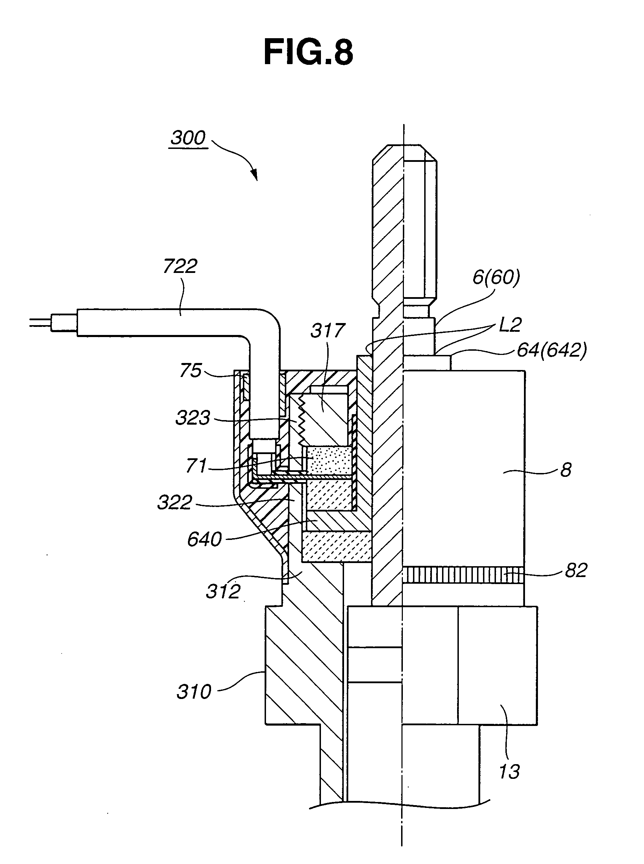

The third embodiment will be described below with reference to FIG 8. A glow plug 300 of the third embodiment is structurally the same as the first embodiment, except for its plug case structure.

The plug case 1 of the glow plug 300 has a cylindrical plug shell 310 and an inward protrusion 317 formed into separate pieces. A rear end portion 312 of the plug shell 310 is formed with a cylindrical wall 323, and the pressure-sensitive element 71 and the other sensor components are disposed radially inside the cylindrical wall 323. The cylindrical wall 323 has female threads formed in an inner circumferential surface thereof, whereas the inward protrusion 317 has male threads formed in an outer circumferential surface thereof. Thus, the inward protrusion 317 can be easily joined to the plug shell 310 by engagement of the male threads and the female threads in such a manner as to push the inward protrusion 317 toward the front.

### Fourth Embodiment

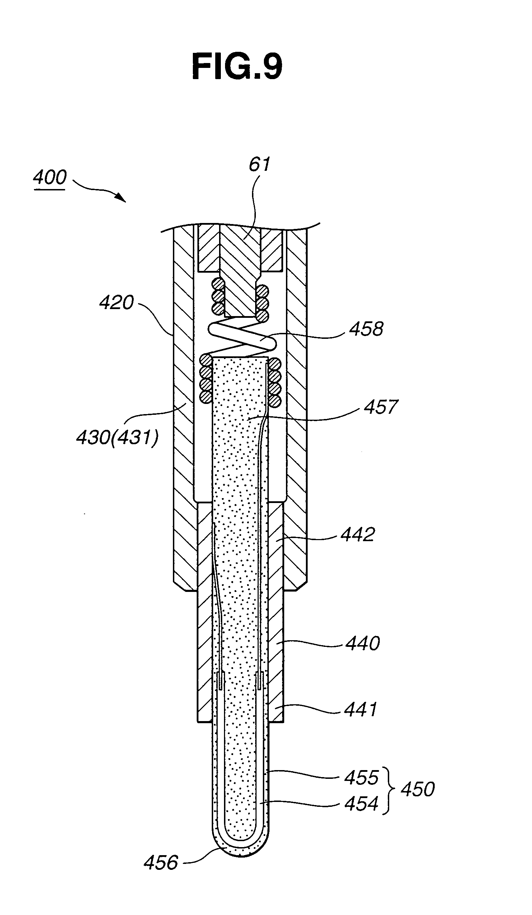

The fourth embodiment will be described below with reference to FIG. 9. A glow plug 400 of the fourth embodiment is structurally the same as the first embodiment, except that its plug body structure.

The glow plug 400 includes a plug body 420 having a housing 430, a sheath 440 with an open front end portion 441, a ceramic heater 450 and a lead 458. A rear end portion 442 of the sheath 440 is welded into a front end portion 431 of the housing 430. The ceramic heater 450 is disposed in the sheath 440 in such a manner that a front end portion 456 of the heater 450 protrudes from the front end portion 441 of the sheath 440, and has a nonmetallic heating element 455 and a silicon nitride ceramic substrate 455 enclosing therein the heating element 455. One end of the heating element 455 is exposed at the surface of an axially middle portion of the ceramic heater 450 and connected to the sheath 440. The other end of the heating element 455 is exposed at the surface of a rear end portion 457 of the ceramic heater 450 and connected to the lead 458. Front and rear end portions of the lead 458 are wound around the rear end portion 457 of the ceramic heater 450 and the front end portion 61 of the center electrode 6, respectively. The heating element 455 thus becomes energized by the passage of electrical current through the center electrode 6, the lead 458, the heating element 455, the sheath 440 and then the housing 430 so as to generate heat and thereby raise the temperature of the front end portion 456 of the ceramic heater 450.

Although not shown in the drawing, the electrode rod 60 is being placed under compressive stress in such a manner as to bring the protrusion 66 closer to a rear end of the housing 430 and thereby apply a compressive load to the insulating washer 67. The center electrode 6 is thus mechanically connected to the housing 430 while being kept insulated from the housing 430 as in the first embodiment.

In order to avoid the lead 458 from being broken by engine vibrations, the lead 458 generally provides a loose mechanical connection between the ceramic heater 450 and the center electrode 6 but a proper electrical connection between the ceramic heater 450 and the center electrode 6. Such a loose mechanical connection may not cause a sufficient axial displacement of the center electrode 6 even when the sheath 440 and the ceramic heater 450 are displaced largely upon development of the combustion pressure. There arises a possibility that the output of the pressure-sensitive element 71 becomes lowered due to the insufficient axial displacement of the center electrode 6. In the glow plug 400, however, the center electrode 6 is mechanically connected to the housing 430 as described above, so as to be displaced largely together with the housing 430, the sheath 440 and the ceramic heater 450 in response to variations in the combustion pressure. It is thus possible to obtain a larger output of the pressure-sensitive element 71.

### Fifth Embodiment

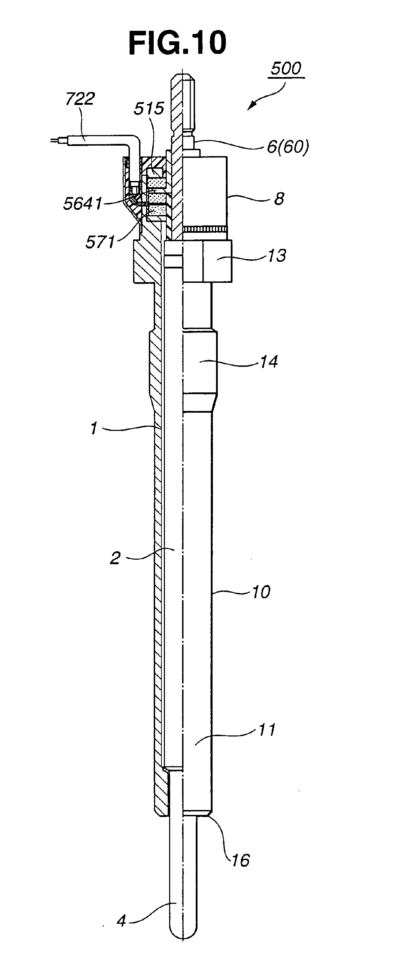

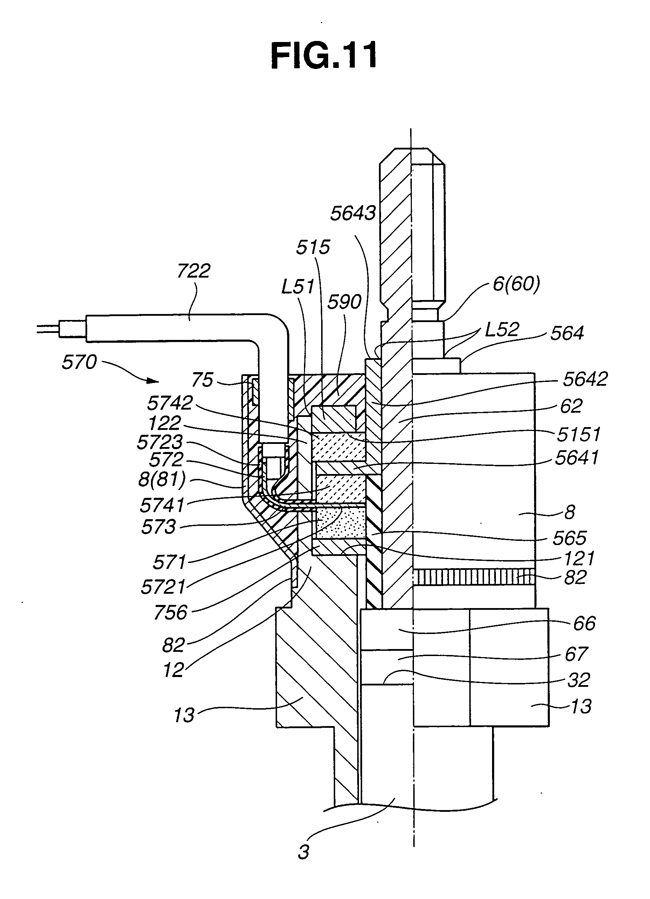

Finally, the fifth embodiment will be described below with reference to FIGS. 10 and 11. A glow plug 500 of the fifth embodiment is structurally the same as the first embodiment, except for its sensor structure.

In the glow plug 500, the plug case 1 has a ring-shaped inward protrusion 515 extending radially inwardly from the rear end of the cylindrical wall 122 of the rear end portion 12 of the plug case 1 and facing the sensor seat 121. The inward protrusion 515 is joined by laser welding to the cylindrical wall 122 at a circumferential joint L51 between the inward protrusion 515 and the rear end of the cylindrical wall 122.

Further, the center electrode 6 has a flanged sleeve 564 provided around the rear end portion 62 of the electrode rod 60. The flanged sleeve 564 is L-shaped in half section, and includes a cylindrical portion 5642 having a rear end 5643 located in a rear side of the rear end portion 12 of the plug case 1 and a ring-shaped outward protrusion 5641 formed integral with the cylindrical portion 5642 and extending radially outwardly from a front end of the cylindrical portion 5642 as shown in FIG. 11. The sleeve 564 is joined by laser welding to the electrode rod 60 at a circumferential joint L52 between the electrode rod 60 and the rear end 5643 of the cylindrical portion 5642 of the sleeve 564. An insulating tube 565 is fitted around the electrode rod 60 in a front side of the sleeve 564.

There is a sensor installation space defined by the inward protrusion 515, the sensor seat 121 and the cylindrical wall 122 of the rear end portion 12 of the plug case 1 and the rear end portion 62 of the center electrode 6 for installing therein a combustion pressure sensor 570 of the glow plug 500.

The combustion pressure sensor 570 has a ring-shaped pressure-sensitive element 571, a ring-shaped metallic spacer 756, a ring-shaped electrode plate 5721 and insulating spacers 5741 and 5742 fitted around the center electrode 6. The metallic spacer 756, the pressure-sensitive element 751, the electrode plate 5721, the insulating spacer 5741, the outward protrusion 5641, the insulating spacer 5742 and the inward protrusion 515 are seated on the sensor seat 121 in order of mention (from the side of the sensor seat 121).

The metallic spacer 756 is made of stainless steel.

The pressure-sensitive element 571 is a piezoelectric element mainly made of lead titanate and polarized in the axial direction of the glow plug 500 so as to generate electrical charge in response to variations axial compressive stress applied thereto. Although the pressure-sensitive element 671 has no electrode layers formed thereon in the fifth embodiment, it is alternatively possible to form electrode layers on axially opposite surfaces of the pressure-sensitive element 571. The pressure-sensitive element 571 is also preloaded with the sensor seat 121 and a front surface 5151 of the inward protrusion 515 brought closer together to keep the insulating spacer 5742, the outward protrusion 5641, the insulating spacer 5741, the electrode plate 5721, the pressure-sensitive element 571 and the metallic spacer 756 into intimate contact with each other.

The electrode plate 5721 is made of an iron-nickel alloy, and has a output portion 573 protruding radially outwardly from the slit or hole of the cylindrical wall 122 of the plug case 1 to read out the output of the pressure-sensitive element 571.

The insulating spacer 5741 is made of alumina ceramic. As the outward protrusion 5641 has an outer diameter smaller than the inner diameter of the cylindrical wall 122 of the plug case 1, the center electrode 6 is kept insulated from the plug case 1 and the electrode plate 5721 by means of the insulating spacer 5741.

The insulating spacer 5742 is also made of alumina ceramic. The plug case 1 and the center electrode 6 are kept insulated from each other by means of the insulating spacer 5742, as the inward protrusion 515 has an inner diameter larger than the outer diameter of the cylindrical portion 5642 of the sleeve 564 of the center electrode 6.

Further, the metallic spacer 756, the pressure-sensitive element 571 and the electrode plate 5721 is kept insulated from the center electrode 6 with the insulating tube 565 fitted around the electrode rod 60 and interposed between the metallic spacer 756, the pressure-sensitive element 571, the electrode plate 5721 and the insulating spacer 5741 of the combustion pressure sensor 570 and the electrode rod 60.

The lead 722 has its bare portion joined by spot welding to the output portion 573 of the electrode plate 5721 to form an output circuit 572 through which the electrical charge of the pressure-sensitive element 571 is outputted to an ECU (not shown). The output portion 573 of the electrode plate 5721 and the bare portion of the lead 722 are covered with an insulating tube 5723 to be kept insulated from the other plug components.

The protective cover 8 is provided such that the rear end portion 12 of the plug case 1 and the output portion 573 of the electrode plate 5721 are covered with the cover portion 81. The lead brace 75 is fixed to the inner surface of the protective cover 8 to brace the lead 722 and draw the lead 722 from the open rear end of the protective cover 8 to the ECU. A resinous sealant 590 is filled into the protective cover 8 so as to seal the lead 722, the output portion 573 of the electrode plate 5721, the inward protrusion 515 and the rear end portion 12 of the plug case 1.

In the glow plug 500, the center electrode 6 becomes axially displaced toward the rear together with the housing 3, the sheath 4 and the heater 5 upon development of the combustion pressure. The axial displacement of the center electrode 6 moves the outward protrusion 5641 toward the rear in such a manner as to decrease the compressive stress on the pressure-sensitive element 571. In response to variations in the compressive stress, the pressure-sensitive element 571 converts the axial displacement of the center electrode 6 into an electrical signal. As the axial displacements of the housing 3, the sheath 4, the heater 5 and the center electrode 6 of the plug body 2 are not restricted by the engagement of the sealing faces 18 and 33 via the gasket 34, it is obtain a larger output of the pressure-sensitive element 571.

It should be however noted that the pressure-sensitive element 571 cannot detect the combustion pressure when the combustion pressure becomes higher than a given value, for the reason that the displacements of the of the housing 3, the sheath 4, the heater 5 and the center electrode 6 are so large under the combustion pressure higher than the given value as to cancel out the compressive stress on the pressure-sensitive element 571.

The entire contents of Japanese Patent Application No. 2003-071703 (filed on March 17, 2003) are herein incorporated by reference.

Although the present invention has been described with reference to specific embodiments of the invention, the invention is not limited to the above-described embodiments. Various modification and variation of the embodiments described above will occur to those skilled in the art in light of the above teaching. For example, the mechanical connection of the center electrode 6 with the housing 3 or 430, the sheath 4 or 440 and/or the heater 5 or 450 is not particularly restricted, and can be made by any other suitable method. In the case of fixing the sheath 4 or 440 (or both of the sheath and the heater) to the housing 3 or 430 by e.g. welding or press fitting, the center electrode 6 can be mechanically connected with at least the sheath 4 or 440 or the housing 3 or 430. In the case of the holding the sheath 4 or 440 (or both of the sheath 4 or 440 and the heater 5 or 450) in the housing 3 or 430 so as to be axially disposed relative to each other, the center electrode 6 can be mechanically connected with at least the sheath 4 or 440. Further, the glow plug 100, 200, 300, 400 or 500 can be configured such that the sealing face 33 of the housing 3 or 430 is pressed directly onto the sealing face 18 of the plug case 1. The inward protrusion 15 or 515 and the sleeve 64 or 564 can alternatively be joined by any other joining method (such as torch welding or adhesive bonding) to the plug shell 10 and the electrode rod 60, respectively. The glow plug 200, 300 or 500 may alternatively be equipped with a ceramic heater. The scope of the invention is defined with reference to the following claims.

## Claims

1. A glow plug (100, 200, 300, 400, 500) for an internal combustion engine (EG), comprising:
a cylindrical plug case (1) having a rearward-facing sealing face (18) formed on an inner surface thereof;
a plug body (2, 420) held in the plug case (1), the plug body (2, 420) including:
a cylindrical housing (3, 430) having a sealing portion (33) engaged onto the sealing face (18) of the plug case (1) to form an airtight seal between the plug case (1) and the housing (3, 430);
a sheath (4, 440) having a rear end portion (42, 442) airtightly fixed in a front end portion (31, 431) of the housing (3, 430);
a heater (5, 450) disposed in the sheath (4, 440) and generating heat upon energization thereof; and
a center electrode (6) disposed in the housing (3, 430) and having a rear end portion (62) thereof projecting from the housing (3, 430), the center electrode (6) being electronically connected with the heater (5, 450) and mechanically connected with at least one of the housing (3, 430), the sheath (4, 440) and the heater (5, 450) so as to become axially displaced in response to variations in engine combustion pressure; and
a combustion pressure sensor (70, 570) arranged between a rear end portion (12, 212, 312) of the plug case (1) and the rear end portion (62) of the center electrode (6) and having a pressure-sensitive element (71; 571) that converts an axial displacement of the center electrode (6) into an electrical signal for detection of the variations in engine combustion pressure.

2. A glow plug (100, 200, 300, 400, 500) according to Claim 1,
the sealing face (18) of the plug case (1) tapering toward to a front end of the plug case (1);
the sealing portion (33) of the housing (3, 430) having a sealing face tapering toward a front end of the housing (3, 430) and engaged with the sealing face (18) of the plug case (1); and
the glow plug (100, 200, 300, 400, 500) further comprising a seal member (34) held between the sealing face (18) of the plug case (1) and the sealing face (33) of the housing (3, 430).

3. A glow plug (100, 200, 300, 400, 500) according to Claim 1 or 2, wherein the sealing portion (33) is formed at a front end of the housing (3, 430).

4. A glow plug (100, 200, 300, 400, 500) according to any one of Claims 1 to 3, wherein the pressure-sensitive element (71, 571) is ring-shaped and has an inner diameter smaller than that of the plug case (1).

5. A glow plug (100, 200, 300, 400) according to any one of Claims 1 to 4,
the plug case (1) having an inward protrusion (15, 317) protruding radially inwardly from the rear end portion (12, 212, 312) of the plug case (1);
the center electrode (6) having an outward protrusion (640) protruding radially outwardly from the rear end portion (62) of the center electrode (6); and
the pressure-sensitive element (71) being placed between a front surface (151) of the inward protrusion (15, 317) and a rear surface (641) of the outward protrusion (640).

6. A glow plug (400) according to any one of Claims 1 to 5,
the heater (450) being a ceramic heater;
the center electrode (6) being mechanically connected with the housing (430) so as to become axially displaced together with the housing (430); and
the glow plug (400) further comprising an insulating member (67) to provide an electrical insulation between the center electrode (6) and the housing (430).

7. A glow plug (100, 200, 300, 400, 500) for an internal combustion engine (EG), comprising:
an outer plug housing (1) having a first sealing face (18) formed on an inner surface thereof;
an inner plug housing (3, 430) held in the outer plug housing (1) and having a second sealing face (33) engaged with the first sealing face (18) to form an airtight seal between the inner and outer plug housings (3, 430; 1);
a center electrode (6) disposed in the inner plug housing (3, 430) and having a rear end portion (62) projecting from a rear end (32) of the inner plug housing (3, 430) and a radially outward protrusion (66) formed on an outer surface of the rear end portion (62), the center electrode (6) being under compressive stress to press the protrusion (66) against the rear end (32) of the housing (3, 430);
an insulating member (67) interposed between the rear end (32) of the housing (3, 430) and the protrusion (66) of the center electrode (6) to keep the housing (3, 430) and the center electrode (6) insulated from each other;
a sheath (4, 440) having a rear end portion (42, 442) airtightly fixed in the inner plug housing (3, 430) and a front end portion (41, 441) to be located in a combustion chamber (EGC) of the engine (EG) so as to receive combustion pressure;
a heater (5, 450) disposed in the sheath (4, 440) and electrically connected with the center electrode (6); and
a combustion pressure sensor (70, 570) arranged between a rear end portion (12, 212, 312) of the outer plug housing (1) and the rear end portion (6) of the center electrode (6) and having a pressure-sensitive element (71, 571) that generates an electrical signal in response to variations in the combustion pressure.

8. A glow plug (100, 200, 300, 400, 500) according to Claim 7,
the combustion pressure sensor (70, 570) further including an output electrode (721, 5721) having a portion (73, 573) projecting radially outwardly from the outer plug housing (1), and
the glow plug (100, 200, 300, 400, 500) further comprising:
a lead (722) having a front portion connected to the projecting portion (73, 573) of the output electrode (721, 5721) and extending axially rearwardly; and
a protective cover (8) covering therein the rear end portion (12, 212, 312) of the outer plug housing (1), the projecting portion (73, 573) of the output electrode (721, 5721) and the front portion of the lead (722) and having an open rear end through which the lead (722) extends externally of the protective cover (8).

9. A glow plug (100, 200, 300, 400) according to Claim 7 or 8,
the outer plug housing (1) having an inward protrusion (15, 317) protruding radially inwardly from the rear end portion (12, 212, 312) of the outer plug housing (1);
the center electrode (6) having a second radially outward protrusion (640) formed on the rear end portion (62) of the center electrode (6); and
the pressure-sensitive element (71, 571) being placed between a front surface (151) of the inward protrusion (15, 317) and a rear surface (641) of the second outward protrusion (640).

10. A glow plug (100, 200, 300, 400) according to Claim 9, wherein the first mentioned outward protrusion (66) is located in a front side of the second outward protrusion (640).
